# EUROPEAN PATENT APPLICATION

(11) **EP 2 806 488 A1**
(43) Date of publication of application: **26.11.2014**
(21) Application number: 13754549.7
(22) Date of filing: 27.02.2013
(51) Int. Cl.: H01M 4/583, H01M 4/48, H01M 10/04

(54) **ELECTRODE ACTIVE MATERIAL FOR LITHIUM SECONDARY BATTERY AND METHOD FOR MANUFACTURING SAME**

(30) Priority: 28.02.2012 KR 20120020471
(71) Applicant: LG Chem, Ltd., Seoul 150-721 (KR)
(72) Inventor: LEE, Yong-Ju, Daejeon 305-727 (KR); KIM, Je-Young, Daejeon 305-761 (KR); CHOI, Seung-Youn, Daejeon 302-834 (KR); JUNG, Dong-Sub, Daejeon 301-790 (KR)
(74) Representative: Goddar, Heinz J.
(86) International application number: PCT/KR2013/001601
(87) International publication number: WO 2013/129850

(57) **Abstract**

The present invention relates to an electrode active material for a lithium secondary battery and the preparation thereof. The electrode active material for a lithium secondary battery according to the present invention comprises a core including (a) first particulates consisting of an oxide of a metal (metalloid) capable of alloying with lithium, and (b) second particulates consisting of an oxide containing the same metal (metalloid) together with lithium; and a conductive carbon layer coated on the surface of the core. The electrode active material of the present invention has high capacity and improved electric conductivity, thereby providing good charge and discharge rate capability.

## Description

### TECHNICAL FIELD

The present invention relates to an electrode active material for a lithium secondary battery and the preparation thereof, and a lithium secondary battery prepared by using the same.

This application claims priority to Korean Patent Application No. 10-2012-0020471 filed on February 28, 2012 in the Republic of Korea, the disclosures thereof are incorporated herein by reference.

Also, this application claims priority to Korean Patent Application No. 10-2013-0021271 filed on February 27, 2013 in the Republic of Korea, the disclosures thereof are incorporated herein by reference.

### BACKGROUND ART

Recently, lithium secondary batteries are attracting the most attention for its high energy density and long cycle life. Generally, a lithium secondary battery includes an anode made from carbon materials or lithium-metal alloys, a cathode made from lithium-metal oxides, and an electrolyte solution obtained by dissolving a lithium salt in an organic solvent.

Initially, metallic lithium was used as an anode active material for the anode of a lithium secondary battery. However, because lithium has low reversibility and low safety, currently carbon materials are mainly used as an anode active material for a lithium secondary battery. The carbon materials have low capacity compared with lithium, but are advantageous in that they have a small change in volume, excellent reversibility, and low price.

As the use of lithium secondary batteries is expanding, the demand for high-capacity lithium secondary batteries is also increasing. Accordingly, there is a demand for high-capacity anode active materials that may replace the carbon materials having low capacity. In order to meet the demand, attempts have been made to use metals as an electrode active material, for example, Si, Sn, and the like, that have a higher charge/discharge capacity than the carbon materials and that allow electrochemical alloying with lithium.

However, this metal-based electrode active material has a great change in volume during charging/discharging, which may cause cracks and micronization to the active material. Secondary batteries using this metal-based anode active material may suddenly deteriorate and reduce in cycle life during repeated charging/discharging cycles, making it unsuitable for commercial use.

In this regard, attempts have been made to use oxides of a metal such as Si and Sn as an electrode active material so as to solve the problems of cracks and micronization generated in the use of such a metal-based electrode active material. However, although the use of such a metal oxide solves the problems of the metal-based electrode active material, it has an initial efficiency lower than graphite-based electrode active materials and forms an irreversible phase material such as lithium oxides and lithium-metal oxides in an initial reaction with lithium ions, thereby deteriorating the initial efficiency even more than the metal-based electrode active material.

### DISCLOSURE

### Technical Problem

Therefore, it is an object of the present invention to provide an electrode active material which can provide high capacity and a relatively high initial efficiency value, prevent the decrease in initial efficiency and have good electric conductivity to improve rate capability, and a method of preparing the electrode active material.

### Technical Solution

In order to achieve the object, the present invention provides an electrode active material for a lithium secondary battery, comprising a core including (a) first particulates consisting of an oxide of a metal (metalloid) capable of alloying with lithium, and (b) second particulates consisting of an oxide containing the same metal (metalloid) together with lithium; and a conductive carbon layer coated on the surface of the core.

Also, in order to achieve the object, the present invention provides a method of preparing an electrode active material for a lithium secondary battery, comprising (S1) forming the above-mentioned core by mixing a lithium salt containing no oxygen and a metal (metalloid) oxide capable of alloying with lithium, followed by heat treatment; and (S2) coating a conductive carbon material on the surface of the core.

### Advantageous Effects

The electrode active material of the present invention comprises first particulates consisting of an oxide of a metal (metalloid) capable of alloying with lithium, and second particulates consisting of an oxide containing the same metal (metalloid) together with lithium, from which lithium is contained in the second particulates even before being subject to initial charging and discharging processes to provide high capacity, and allow the formation of less of an irreversible phase such as a lithium oxide and a lithium-metal oxide during initial charging and discharging processes of batteries, thereby minimizing a dead volume in both electrodes and eventually improving and maintaining an initial efficiency, and also it has a conductive coating on the surface thereof to improve electric conductivity, so can be used in the preparation of a lithium secondary battery having good rate capability.

### DESCRIPTION OF THE DRAWINGS

The accompanying drawings illustrate preferred embodiments of the present invention and, together with the foregoing disclosure, serve to provide further understanding of the technical spirit of the present invention. However, the present invention is not to be construed as being limited to the drawings.
FIG. 1 is a TEM photograph of the electrode active material prepared in Example 1 of the present invention.
FIG. 2 is a TEM photograph of the electrode active material prepared in Example 2 of the present invention.
FIG. 3 is a TEM photograph of the electrode active material prepared in Example 3 of the present invention.

### BEST MODE

Hereinafter, the present invention will be described in detail. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation.

The electrode active material of the present invention is characterized by comprising a core including (a) first particulates consisting of an oxide of a metal (metalloid) capable of alloying with lithium, and (b) second particulates consisting of an oxide containing the same metal (metalloid) together with lithium; and a conductive carbon layer coated on the surface of the core.

When a metal (metalloid) oxide capable of alloying with lithium, e.g., SiO and snO, is used as an anode active material, an irreversible phase such as a lithium oxide and a lithium-metal oxide is formed due to the lithium ions (Li⁺) intercalated in an anode reacting with the metal (metalloid) oxide during initial charging and discharging processes of batteries. Such an irreversible phase surrounds a metal such as Si and Sn to reduce the volume change of the metal. Accordingly, cracks and micronization due to the volume change of electrode active materials may be diminished by using the metal (metalloid) oxide, as compared with the use of electrode active materials consisting of only a metal such as Si and Sn.

However, as the irreversible phase of a lithium oxide and a lithium-metal oxide is formed, lithium is consumed and so the amount of actual usable lithium is reduced, thereby deteriorating the initial efficiency and capacity of batteries. Particularly, in the case of conventional secondary battery systems whose cathode is a lithium source, when the irreversible capacity of the anode is large, the cathode undergoes a dead volume increase through the irreversible behavior of the anode, such that the capacity of the cathode is less than the actual usable capacity amount of a cathode, thereby decreasing the capacity of batteries. Also, owing to such a dead volume, battery capacity and charging/discharging efficiency at each cycle are reduced to deteriorate the life characteristics of batteries.

In order to prevent such a dead volume in the cathode from being generated by the irreversible behavior of the anode, in the known methods of preparing an electrode active material, metallic lithium such as a lithium foil and lithium powder has been conventionally used to react with the metal (metalloid) oxide, or the metallic lithium has been coated on the surface of a prepared metal (metalloid) oxide electrode.

However, the known electrodes have not been made in mass production due to safety problems such as ignition, caused by the reaction of metallic lithium and moisture. Also, in the known electrodes, lithium simply exists on the surface of the metal (metalloid) oxide electrode and therefore, fails to reduce the formation of an irreversible phase due to the reaction of lithium and the metal (metalloid) oxide during the actual charging process of batteries. In addition, the electrode active material of the known electrodes consists of a particle phase of only a metal (metalloid) oxide, and does not have a particle phase containing both metal (metalloid) and lithium as defined in the electrode active material of the present invention.

Accordingly, the electrode active material of the present invention has a core comprising first particulates consisting of an oxide of a metal (metalloid) (e.g., Si, Sn and the like), and second particulates consisting of an oxide containing both the same metal (metalloid) and lithium.

That is, since the core of the electrode active material of the present invention has lithium contained in the second particulates even before being subject to initial charging and discharging processes, an irreversible phase such as a lithium oxide and a lithium-metal oxide is less formed by the reaction of lithium and the metal (metalloid) oxide in the initial charging process of batteries, and thus the initial efficiency of batteries can be improved. Also, the generation of a dead volume in the cathode by the irreversible phase of the anode can be minimized to prevent the deterioration of battery capacity. Accordingly, batteries using the electrode active material of the present invention can exhibit an initial efficiency of about 50% or higher, as well as high capacity.

Examples of the metal (metalloid) oxide in the first particulates may include oxides of metal (metalloid)s such as Si, Sn, Al, Sb, Bi, As, Ge, Pb, Zn, Cd, In, Ti, Ga, and an alloy thereof, or metals, but the present invention is not particularly limited thereto if each of them may be alloyed with lithium.

Also, examples of the oxide containing the metal (metalloid) and lithium in the second particulates may include Li₂SiO₃, Li₂SnO, Li₄SiO₄, Li₂Si₂O₅, Li₆Si₂O₇, Li₂Si₃O₇, Li₈SiO₆, Li₂SnO₃, Li₅AlO₄, LiAlO₂, and LiAl₅O₈, but the present invention is not particularly limited thereto if lithium is contained in each metal (metalloid) oxide. In addition, such an oxide may be crystalline or amorphous. Such second particulates is included in the electrode active material to form less of lithium oxides and lithium-metal oxides in an anode during initial charging and discharging processes of batteries, thereby minimizing the generation of a dead volume in a cathode by the initial irreversible behavior of the anode.

The first particulates consisting of the metal (metalloid) oxide and the second particulates consisting of an oxide containing the same metal (metalloid) and lithium may coexist with each other within the core. Preferably, one or two aggregates of the first particulates may be surrounded with the second particulates.

The first particulates and the second particulates are preferably present in a weight ratio of 5:95 to 95:5. If the amount of the first particulates is less than 5 wt%, a reversible capacity is low, providing a poor effect as a high capacity of electrode active material, and since excessive amounts of lithium are contained in the second particulates, they react with moisture, thereby causing concerns for safety. Meanwhile, if the amount of the first particulates is higher than 95 wt%, lithium oxides and lithium-metal oxides of an irreversible phase are excessively formed by the reaction of the metal (metalloid) oxide with lithium ions during charging and discharging processes of batteries, thereby deteriorating in initial efficiency.

Also, the electrode active material of the present invention has a conductive carbon layer coated on the surface of the core. In the electrode active material of the present invention, the core increases the initial efficiency of batteries, but has a low electric conductivity to provide poor rate capability during charging and discharging processes. The rate capability refers to a characteristic related to a charging and discharging rate, and a high charging and discharging rate provides a good rate capability. The core according to the present invention has high capacity, but if the rate capability is poor in a current area which is actually being used, a high capacity may not be sufficiently exerted, thereby failing to bring out the advantage of high capacity.

Accordingly, the electrode active material of the present invention applies a conductive carbon coating to enhance electric conductivity and improve rate capability, thereby sufficiently bringing out the high capacity of the core.

The conductive carbon material, which is used to form a coating layer in the present invention, is not particularly limited if it has conductivity. Also, it may contain crystalline carbon or amorphous carbon. The carbon coating layer may be formed by the carbonization of a conductive carbon precursor, or by direct coating of conductive carbon particles. The conductive carbon precursor may be any one of organic compounds which contain carbon and exist in a liquid or solid phase. For example, the conductive carbon precursor may be a liquid precursor such as pitches, heavy oils and resins, or a gas precursor such as methane, ethylene and acetylene. Suitable resins are thermosettiing resin which may be carbonized after cross-linking, e.g., urea resins, melamine resins, phenol resins, epoxy resins, unsaturated polyester resins, alkyl resins, alkyd resins and urethane resins, but the present invention is not limited thereto.

Also, the conductive carbon particles may be carbon black such as acetylene black, thermal black, furnace black and channel black; carbon fiber; or carbon tube, but these are listed for the purpose of illustration, and the present invention is not limited thereto.

The amount of conductive carbon in the conductive carbon layer may be variously adopted depending on coating methods or the kinds of specific batteries using an active material. For example, the amount of conductive carbon in the conductive carbon layer may be 2 to 900 parts by weight, preferably 2 to 100 parts by weight, more preferably 2 to 20 parts by weight, based on 100 parts by weight of all components forming the core, but the present invention is not limited thereto. If the conductive carbon amount is less than 2 parts by weight, uniform coating on the surface may be difficult and conductivity may be insufficient. If the conductive carbon amount is higher than 900 parts by weight, the ratio of the core becomes relatively small, thereby failing to provide high capacity.

First, a lithium salt having no oxygen is mixed with an oxide of a metal (metalloid) capable of alloying with lithium, followed by heat treatment, to obtain the above-mentioned core-forming material (S1).

The metal (metalloid) oxide is not particularly limited if it is an oxide of a metal or metalloid capable of alloying with lithium, and its non-limiting examples may include oxides of Si, Sn, Al, Sb, Bi, As, Ge, Pb, Zn, Cd, In, Ti, Ga and an alloy thereof.

Also, as a lithium salt forming the second particulates by mixing with such metal (metalloid) oxide, a lithium salt having no oxygen may be used. If the lithium salt contains oxygen, lithium oxide is produced during heat treatment, from which oxygen as well as lithium may react with a metal oxide to deteriorate in initial efficiency.

Examples of such a lithium salt having no oxygen may include LiCl, LiBF₄, LiAlCl₄, LiSCN, LiSbF₆, LiPF₆, LiAsF₆, LiB₁₀Cl₁₀, LiF, LiBr and LiI, but the present invention is not limited thereto.

The lithium salt having no oxygen and the metal (metalloid) oxide are preferably mixed in a weight ratio of 5 : 95 to 80 : 20. If the lithium salt having no oxygen is used in an amount of less than 5 wt%, the amount of lithium reacting with the metal (metalloid) oxide becomes insufficient, so that only a few of the second particulates containing lithium are formed. Thereby, in the initial charging/discharging process of batteries, an irreversible lithium oxide or lithium-metal oxide may be produced in excess amounts due to the reaction of lithium ions inserted into an anode and the metal (metalloid) oxide, thereby providing an inadequate effect of improving the initial efficiency of batteries. If the lithium salt having no oxygen is used in an amount higher than 80 wt%, excess amounts of lithium are contained in the second particulates causing safety problems of batteries to be of concern. Also, lithium may precipitate due to the excess amount of lithium which can be contained in the second particulates.

In the present invention, the mixing of the lithium salt having no oxygen and the oxide of a metal (metalloid) capable of alloying with lithium may be carried out by a chemical or mechanical manner.

Specifically, the chemical mixing process which is one embodiment of the present invention may comprise dissolving the lithium salt having no oxygen in a solvent and dispersing a metal oxide in the resulting solution to form a dispersion; and drying the dispersion.

The solvent or dispersing medium, which is used in dissolving the lithium salt having no oxygen and dispersing the metal (metalloid) oxide capable of alloying, is not particularly limited, and accordingly, this allows for uniform dissolution and mixing and it is preferable that it may be easily removed later. Non-limiting examples of such a solvent or dispersing medium include distilled water; alcohols such as ethanol and methanol; acetone, tetrahydrofuran, methylene chloride, chloroform, dimethyl formamide, N-methyl-2-pyrrolidone, cyclohexane, dichloromethane, dimethyl sulfoxide, acetonitrile, pyridine, amines and a mixture thereof.

When the lithium salt is dissolved in such a solvent or dispersing medium and the metal (metalloid) oxide is dispersed therein to form a dispersion, a dispersing unit generally known in the art may be used to disperse the metal (metalloid) oxide. The dispersing unit is not particularly limited if it can disperse substances to be treated in a dispersing medium, and examples thereof may include an ultrasonic dispersing unit, a magnetic stirrer and a spray drier.

Then, the formed dispersion is dried at room temperature from 25 to 28°C or a temperature of 50 to 200°C to remove the solvent or dispersing medium, thereby obtaining a mixture in which the lithium salt exists on the surface of the metal (metalloid) oxide. The removal of the solvent or dispersing medium may be made by other methods known in the art.

In the present invention, besides the above-mentioned chemical mixing process, any mechanical mixing process may be used to uniformly mix the lithium salt having no oxygen and the oxide of a metal (metalloid) capable of alloying with lithium. The term 'mechanical mixing' used herein refers to the forming of a uniform mixture of particles to be mixed by applying a level of mechanical force.

Generally, the mechanical mixing is carried out by a mechanical mixer such as a high energy ball mill using chemically inert beads, a planetary mill, a stirred ball mill and a vibrating mill, which have a number of parameters that may be varied, including rotation velocity, a weight ratio of ball and powders, a size of ball, a mixing time, a mixing temperature and atmosphere. In order to obtain a good effect of mixing, alcohols such as ethanol and higher fatty acids such as stearic acid may be added as a processing control agent. The processing control agent may be added in an amount of 2.0 parts by weight or less, preferably 0.5 parts by weight or less, based on 100 parts by weight of the mixture. The addition of the processing control agent can reduce its mixing time.

Also, in the mechanical mixing process, when the conditions of mixing time, mixing temperature and rotation velocity are varied by raising the rotation velocity to some degree at a high temperature for a long time, mechanical alloying can be simultaneously made while the lithium salt having no oxygen and the oxide of the metal (metalloid) capable of alloying with lithium are milled and mixed with each other. In the present invention, an electrode active material can be obtained in the form of an alloy having a uniform composition by such mechanical mixing and mechanical alloying. This case may not need heat treatment under an inert atmosphere.

When the mixture thus formed is subject to heat treatment in a reactor under an inert atmosphere, the metal (metalloid) oxide and the lithium salt existing on the surface thereof react with each other to form a new bond, thereby obtaining a resultant in which the metal (metalloid) oxide is coexisted with an oxide containing both the same metal (metalloid) as that of the metal (metalloid) oxide and lithium. In this procedure, the anionic part of such lithium salt is emitted as a gas.

The heat treatment is carried out at a temperature ranging from the melting point of the lithium salt having no oxygen to the boiling point thereof without particular limitation, and such a temperature range may be varied depending on the types of the lithium salt having no oxygen. If the heat treatment is carried out at a temperature less than the melting point of the lithium salt, a reaction of the lithium salt and the metal (metalloid) oxide may not occur. If the heat treatment is carried out at a temperature higher than the boiling point of the lithium salt, the lithium salt may be emitted in the form of a gas before the lithium salt and the metal (metalloid) oxide react with each other sufficiently. Accordingly, it is preferred that the heat treatment is carried out at a temperature of 500 to 2000°C.

Especially, when the lithium salt having no oxygen, such as LiCl is mixed with the metal (metalloid) oxide such as SiO, followed by heat treatment, the heat treatment is preferably carried out at a temperature of 1300°C. This is because SiO has a strong tendency to separate into SiO₂ and SiO at a temperature higher than 1300°C prior to growing, making it difficult to control the thickness of SiO. Accordingly, it is preferred that heat treatment be carried out at a temperature ranging from the melting point of the lithium salt having no oxygen to the boiling point thereof while taking into consideration the kinds of the metal (metalloid) oxide.

In order to block treatment of the mixture from coming into contact with oxygen, heat treatment is preferably carried out under an inert atmosphere, for example, in the presence of a gas such as nitrogen, argon, helium, krypton and xenon. If the mixture comes into contact with oxygen during heat treatment, lithium and oxygen react with the metal oxide to produce lithium oxide or a lithium-metal oxide, thereby deteriorating an effect of increasing the initial efficiency of batteries.

Next, the core-forming material is coated with a conductive carbon material on the surface thereof (S2).

The coating of the conductive carbon material may be carried out by mixing the core-forming material with a liquid or gas conductive carbon precursor, followed by heat treatment, or by mechanically alloying the core-forming material with conductive carbon particles.

In the case that the carbon precursor is used, the carbon precursor comes into contact with the surface of the core-forming material, and heat treatment is carried out to carbonize the carbon precursor, to form a carbon coating layer. In order to obtain a uniform conductive carbon coating layer on the outer surface of the core, it is preferred to uniformly mix the carbon precursor and the core-forming material. When a liquid carbon precursor is used, a dispersant may be added. When a gas carbon precursor is used, it may be continuously applied to the core-forming material by using a rotary tube furnace. The heat treatment of the precursor is preferably carried out at a temperature of 700 to 1,300°C. Also, the heat treatment is preferably carried out under an inert atmosphere.

For direct coating of the conductive carbon particles on the core-forming material, the mechanical alloying method as mentioned above may be applied. The core-forming material and the conductive carbon particles may be mixed with applying mechanical force thereto, thereby coating conductive carbon particles on the surface of the core-forming material.

The electrode active material of the present invention thus prepared can be used as a cathode active material or an anode active material, preferably an anode active material.

The electrode active material of the present invention may be used in the preparation of a cathode or an anode by a conventional method known in the art. For example, the electrode active material of the present invention is mixed with a binder, a solvent, and optionally a conducting material and a dispersing agent, followed by stirring, to produce a slurry and applying the slurry on a current collector, followed by compression, to prepare an electrode.

The binder which may be used in the present invention includes various kinds of binder polymers including vinylidenefluoride-hexafluoropropylene copolymer (PVDF-co-HFP), polyvinylidenefluoride, polyacrylonitrile, and polymethylmethacrylate.

After the electrode is prepared, a conventional lithium secondary battery including the cathode, the anode, a separator interposed between the cathode and the anode, and an electrolyte solution may be prepared.

The electrolyte solution used in the present invention comprises a lithium salt as an electrolyte salt. The lithium salt may be any one which is conventionally used in an electrolyte solution for a lithium secondary battery. For example, an anion of the lithium salt may be any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte solution used in the present invention comprises an organic solvent which is conventionally used in an electrolyte solution for a lithium secondary battery, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethylsulfoxide, acetonitrile, dimethoxyethane, diethoxyethane, vinylene carbonate, sulforane, γ-buryrolactone, propylene sulfite, and tetrahydrofuran and a mixture thereof. In particular, among the above carbonate-based organic solvents, ethylene carbonate and propylene carbonate that are cyclic carbonates are preferred, since they have high viscosity and consequently a high dielectric constant to easily dissociate the lithium salt in the electrolyte. More preferably, such a cyclic carbonate is used as a mixture with a linear carbonate having a low viscosity and a low dielectric constant, such as dimethyl carbonate and diethyl carbonate in a suitable ratio, to provide an electrolyte having a high electric conductivity.

Optionally, the electrolyte solution used in the present invention may further include an additive, such as an overcharge inhibitor which is conventionally used in an electrolyte.

Also, the separator which may be used in the present invention includes, but is not limited to, a single-layered or multi-layered porous polymer film conventionally used as a separator, and a porous non-woven fabric conventionally used as a separator, and the like. The porous polymer film may be made of polyolefin-based polymer, for example, ethylene homopolymer, propylene homopolymer, ethylene/butene copolymer, ethylene/hexene copolymer, and ethylene/methacrylate copolymer, and the porous non-woven fabric may be made of, for example, high-melting glass fibers, polyethylene terephthalate fibers, and the like. However, the present invention is not limited thereto.

A battery case used in the present invention may be any one conventionally used in the art, and the shape of the battery case is not particularly limited depending on its uses. For example, the shape of the battery case may be cylindrical, prismatic, pouch, or coin.

Hereinafter, the present invention will be described in detail through specific examples. However, the description proposed herein is just a preferable example for the purpose of illustrations only, not intended to limit the scope of the invention, so it should be understood that the examples are provided for a more definite explanation to an ordinary person skilled in the art.

### Example 1

### <Preparation of Core-forming Material>

50 Parts by weight of lithium chloride (LiCl) was dissolved in ethanol, in which 50 parts by weight of SiO was uniformly dispersed to obtain a dispersion. The dispersion was heated to 70°C to remove the used solvent, thereby obtaining a mixture. The mixture was annealed at 800°C under Ar atmosphere, to prepare a core-forming material according to the present invention.

### <Coating of Conductive Carbon Material>

40 mmol of Resorcinol, 40 mmol of formaldehyde (3000 ml of 37wt% aqueous solution), 0.75 mmol of sodium carbonate as a catalyst, and 9.88 mmol of cetyltrimethyl ammonium bromide (CTAB) as a dispersant were dispersed in 1000 ml of distilled water, to which 10 g of the core-forming material was added, followed by heating at 85°C for 3 days, to obtain a resorcinol- formaldehyde (RF) sol solution.

The core-forming material-containing RF sol obtained above was annealed at 900°C for 5 hours under Ar atmosphere, to form a conductive carbon layer on the surface of the core-forming material.

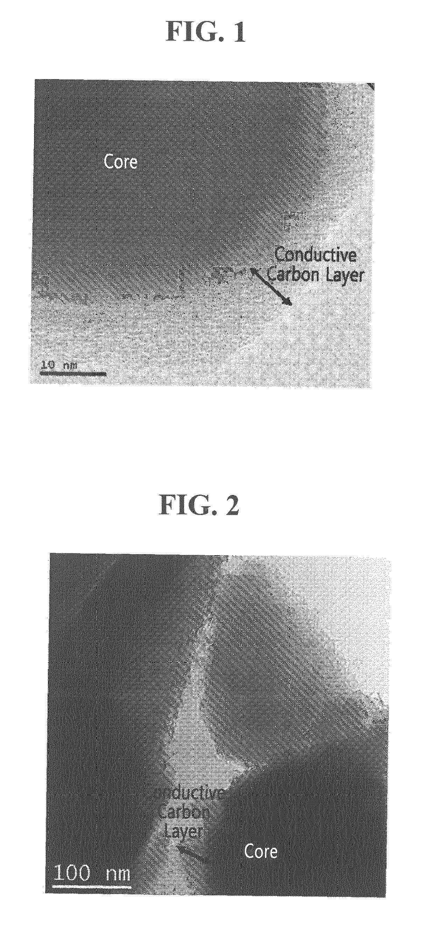

It was confirmed that the amount of conductive carbon in the conductive carbon layer is 5 parts by weight based on 100 parts by weight of the core-forming material, and the coating thickness is about 10 nm. The electrode active material having the conductive carbon layer according to the present invention was analyzed through a transmission electron microscope (TEM), and as a result, its TEM photograph was shown in FIG. 1.

### <Preparation of Battery>

Powders of the electrode active material prepared above, polyvinylidene fluoride (PVDF) as a binder, and acetylene black as a conductive material were mixed in a ratio of 88:10:2, and the resulting mixture was added to N-methyl-2-pyrrolidone (NMP) as a solvent, to obtain a uniform electrode slurry. The electrode slurry obtained was coated on one surface of a copper current collector in a thickness of 65 µm, dried and compressed, followed by punching to the desired size, to obtain an electrode.

Ethylene carbonate (EC) and diethyl carbonate (DEC) were mixed at a ratio of 30:70 (vol%), and LiPF₆ was added thereto, to obtain 1M LiPF₆ of non-aqueous electrolyte solution.

The electrode obtained above was used as an anode, a foil made of metallic lithium was used as a counter electrode, and a polyolefin separator was interposed between both electrodes, in which the electrolyte solution obtained above was introduced, to prepare a coin-type secondary battery.

### Example 2

The procedures of Example 1 were repeated except that the coating of a conductive carbon material was carried out by using methane as a raw material in a rotary tube furnace, to prepare an electrode active material and a battery.

The formation of a conductive carbon coating layer using methane was specifically carried out as follows.

20g of Core-forming material was introduced in a rotary tube furnace, in which argon gas was supplied in a rate of 0.5 L/min, and the temperature of the furnace was raised up to 900°C in a speed of 5°C/min. The heat treatment was carried out for 5 hours by rotating the rotary tube furnace at 10 rpm while supplying 1.8 L/min of argon gas and 0.3 L/min of methane gas, to prepare an electrode active material having a conductive carbon coating layer.

It was confirmed that the amount of conductive carbon in the conductive carbon layer is 5 parts by weight based on 100 parts by weight of the core-forming material. The TEM photograph of the electrode active material having the conductive carbon layer according to the present invention was shown in FIG. 2.

### Example 3

The procedures of Example 1 were repeated except that the coating of a conductive carbon material was carried out by mixing 100 parts by weight of the core-forming material with 10 parts by weight of artificial graphite having D₅₀ = 15 µm, putting stainless balls having a 3mm-diameter and the powders of the resulting mixture in a weight ratio of 5:1 in a mechano fusion device (Hosokawa Micron), and then mechanical alloying was carried out at 600 rpm for 30 minutes, to prepare an electrode active material and a battery.

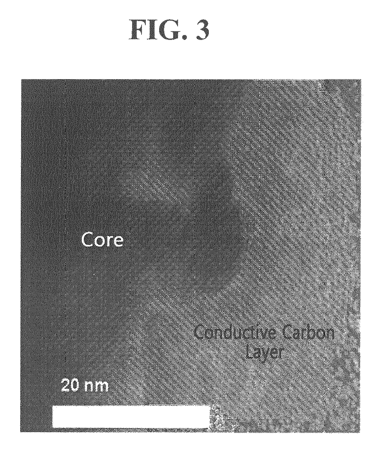

The TEM photograph of the electrode active material having the conductive carbon layer according to the present invention was shown in FIG. 3.

### Comparative Example 1

The procedures of Example 1 were repeated except that the core-forming material was not subject to coating, to prepare an electrode active material and a battery.

### Comparative Example 2

The procedures of Example 3 were repeated except that 100 parts by weight of the core-forming material was mixed with 5 parts by weight of artificial graphite, to prepare an electrode active material and a battery.

### Experimental Example: Charge/discharge Characteristics of Batteries

The batteries prepared in Examples and Comparative Examples were evaluated for their charge/discharge characteristics.

Charging of the batteries was conducted up to 5 mV at constant current, and completed when a current density reached 0.005C. Discharging of the batteries was conducted up to 1.0 V at constant current.

Also, in order to evaluate the rate capability of the batteries, after charging and discharging at 0.1C, the charge and discharge rate capabilities of the batteries were measured based on the charge and discharge capacities thereof. In the case of the discharge rate capability, in order to minimize an influence by the charge rate capability, it was measured by charging the batteries at 0.1C and then discharging them in the corresponding rate.

The results of charge/discharge characteristics are shown in Table 1.

**Table 1**

| | Powder Resistivity (ohm·cm) | Discharge Capacity (mAh/g) | Initial Efficienty (%) | Rate Capability (%) | | | | | |
|---|---|---|---|---|---|---|---|---|---|
| | | | | Charge | | | Discharge | | |
| | | | | 0.5C | 1.0C | 2.0C | 0.5C | 1.0C | 2.0C |
| Ex. 1 | 4.12×10⁻¹ | 1594 | 78.6 | 99.2 | 95.6 | 91.2 | 99.4 | 94.4 | 90.6 |
| Ex. 2 | 3.79×10⁻¹ | 1596 | 78.2 | 99.0 | 94.7 | 90.6 | 99.7 | 96.1 | 91.8 |
| Ex. 3 | 8.73×10⁻¹ | 1513 | 77.9 | 98.9 | 94.3 | 88.5 | 98.3 | 92.5 | 89.0 |
| Com. Ex. 1 | 2.53×10⁹ | 1685 | 78.3 | 82.5 | 56.1 | 33.8 | 83.2 | 62.7 | 39.4 |
| Com. Ex. 2 | 6.20×10¹ | 1596 | 78.1 | 85.9 | 74.4 | 59.0 | 88.7 | 75.1 | 65.8 |

As can be seen from FIGS. 1 and 2, when a coating layer was formed by using a carbon precursor and heat treatment was carried out as in Examples 1 and 2, each core was uniformly surrounded with an amorphous carbon layer, thereby providing surprisingly improved powder resistivity as compared with Comparative Example 1. Accordingly, the batteries of the Examples exhibited surprisingly improved charge characteristics and rate capabilities such that about 90% rate capability was obtained at a charge and discharge rate of 2.0C.

In cases of Example 3 and Comparative Example 2 in which artificial graphite was coated by way of mechanical alloying, conductivity was slightly reduced as compared with Examples 1 and 2, but other results were similar.

## Claims

1. An electrode active material for a lithium secondary battery, comprising a core including (a) first particulates consisting of an oxide of a metal (metalloid) capable of alloying with lithium, and (b) second particulates consisting of an oxide containing the same metal (metalloid) together with lithium; and a conductive carbon layer coated on the surface of the core.

2. The electrode active material for a lithium secondary battery according to claim 1, wherein the first particulates and the second particulates are present in a weight ratio of 5:95 to 95:5.

3. The electrode active material for a lithium secondary battery according to claim 1, wherein the metal (metalloid) oxide in the first particulates is an oxide of a metal (metalloid) selected from the group consisting of Si, Sn, Al, Sb, Bi, As, Ge, Pb, Zn, Cd, In, Ti, Ga and an alloy thereof.

4. The electrode active material for a lithium secondary battery according to claim 1, wherein the oxide containing the metal (metalloid) and lithium in the second particulates is selected from the group consisting of Li₂SiO₃, Li₂SnO, Li₄SiO₄, Li₂Si₂O₅, Li₆Si₂O₇, Li₂Si₃O₇, Li₈SiO₆, Li₂SnO₃, Li₅AlO₄, LiAlO₂ and LiAl₅O₈.

5. The electrode active material for a lithium secondary battery according to claim 1, wherein the conductive carbon layer is formed from a conductive carbon material containing crystalline carbon, amorphous carbon or a mixture thereof.

6. The electrode active material for a lithium secondary battery according to claim 1, wherein the amount of conductive carbon in the conductive carbon layer is 2 to 900 parts by weight based on 100 parts by weight of materials forming the core.

7. The electrode active material for a lithium secondary battery according to claim 1, which is an anode active material.

8. A method for preparing the electrode active material of claim 1, comprising:
(S1) mixing a lithium salt having no oxygen with an oxide of a metal (metalloid) capable of alloying with lithium, followed by heat treatment, to obtain a core-forming material; and
(S2) coating the core-forming material with a conductive carbon material on the surface thereof.

9. The method according to claim 8, wherein the lithium salt having no oxygen is selected from the group consisting of LiCl, LiBF₄, LiAlCl₄, LiSCN, LiSbF₆, LiPF₆, LiAsF₆, LiB₁₀Cl₁₀, LiF, LiBr and Lil.

10. The method for preparing an electrode active material according to claim 8, wherein the metal (metalloid) is an oxide of a metal (metalloid) selected from the group consisting of Si, Sn, Al, Sb, Bi, As, Ge, Pb, Zn, Cd, In, Ti, Ga and an alloy thereof.

11. The method for preparing an electrode active material according to claim 8, wherein the mixing of the lithium salt and the metal (metalloid) oxide in step (S1) is carried out by a chemical or mechanical mixing.

12. The method for preparing an electrode active material according to claim 8, wherein the heat treatment in step (S1) is carried out at a temperature of 500 to 2000°C.

13. The method for preparing an electrode active material according to claim 8, wherein the coating of the conductive carbon material in step (S2) is carried out by mixing the core-forming material with a liquid or gas conductive carbon precursor, followed by heat treatment.

14. The method for preparing an electrode active material according to claim 8, wherein the coating of the conductive carbon material in step (S2) is carried out by mechanically alloying the core-forming material with conductive carbon particles.

15. The method for preparing an electrode active material according to claim 8, wherein the electrode active material prepared is an anode active material.

16. An electrode anode for a lithium secondary battery, comprising a current collector; and an electrode active material layer formed on at least one surface of the current collector and comprising an electrode active material,
wherein the electrode active material is the electrode active material for a lithium secondary battery according to any one of claims 1 to 7.

17. A lithium secondary battery, comprising a cathode, an anode, and a separator interposed between the cathode and the anode,
wherein the cathode or the anode is the electrode for a lithium secondary battery according to claim 16.
